# EUROPÄISCHE PATENTANMELDUNG

(11) **EP 0 609 660 A1**
(43) Veröffentlichungstag der Anmeldung: **10.08.1994**
(21) Anmeldenummer: 94100218.0
(22) Anmeldetag: 08.01.1994
(51) Int. Cl.: F16K 1/20, F16K 27/02

(54) **Schnellschlussklappe**

(30) Priorität: 30.01.1993 DE 4302666
(71) Anmelder: ABB Management AG, CH-5401 Baden (CH)
(72) Erfinder: Neubold, Michael, D-75446 Wirnsheim (DE)

(57) **Zusammenfassung**

Diese Schnellschlussklappe (1) ist mit einem Gehäusekörper (2), mit einer in den Gehäusekörper (2) eingelassenen Serviceöffnung (4), mit mindestens zwei in den Gehäusekörper (2) eingearbeiteten Lagerstellen (17) für eine angetriebene Welle (16), und mit einem an der Welle (16) befestigten, um deren Achse schwenkbaren und mit einem demontierbaren Sitzring (10) zusammenwirkenden Klappenteller (11), versehen.

Die Lagerstellen (17) sind ausserhalb des in dem Gehäusekörper (2) inhomogene Spannungsverteilungen verursachenden Bereichs der Serviceöffnung (4) angeordnet.

## Beschreibung

### TECHNISCHES GEBIET

Die Erfindung geht aus von einer Schnellschlussklappe (Quick Action Flap) gemäss dem Oberbegriff des Anspruchs 1.

### STAND DER TECHNIK

Derartige Schnellschlussklappen sind beispielsweise für die rasche Unterbrechung der Dampfzufuhr zu einer Turbine einer Kraftwerksanlage vorgesehen. Es sind Schnellschlussklappen konventioneller Bauart bekannt, die aufwendig herzustellende Gehäusekörper aufweisen. Diese Gehäusekörper werden mit vergleichsweise hohen Temperaturen beaufschlagt.

Aus der Schrift EP-A1-0 374 644 ist eine Schnellschlussklappe mit einem Klappenteller bekannt, welche einen Gehäusekörper mit einer eingelassenen Serviceöffnung aufweist. Der Klappenteller ist an einer angetriebenen Welle befestigt. In den Gehäusekörper sind zwei Lagerstellen eingearbeitet, in denen die Welle gelagert ist. In den Gehäusekörper ist ein Sitzring eingelassen, der mit dem Klappenteller zusammenwirkt, sodass bei Bedarf der durch die Schnellschlussklappe hindurchfliessende Dampfstrom durch den auf dem Sitzring aufliegenden Klappenteller unterbrochen wird. Die Lagerstellen sind bei dieser Ausführung in der Nähe der Serviceöffnung, also in einem Bereich des Gehäusekörpers wo die Spannungsverteilung problematisch ist, angeordnet.

Derartige Schnellschlussklappen müssen in allen Betriebssituationen sehr zuverlässig arbeiten, um den hohen Anforderungen an die Betriebssicherheit und an die Dynamik genügen zu können. Für höhere Temperaturen ist eine derartige Schnellschlussklappe nicht geeignet, da dann eine Verformung des Gehäusekörpers nicht ausgeschlossen werden kann. Sollte sich jedoch der Gehäusekörper infolge einer zu starken Erwärmung und Druckbelastung verziehen, kann es zu einem Klemmen der Welle in den Lagerstellen kommen, sodass sich der Klappenteller zu langsam oder überhaupt nicht bewegt.

### DARSTELLUNG DER ERFINDUNG

Hier will die Erfindung Abhilfe schaffen. Die Erfindung, wie sie in den unabhängigen Ansprüchen gekennzeichnet ist, löst die Aufgabe, eine Schnellschlussklappe zu schaffen, welche einfach hergestellt werden kann und welche bei vergleichsweise hohen Betriebstemperaturen und Druckbelatungen gegen ein Langzeitklemmen besonders gut abgesichert ist.

Die durch die Erfindung erreichten Vorteile sind im wesentlichen darin zu sehen, dass trotz der wesentlich verbesserten Betriebssicherheit der Schnellschlussklappe eine wirtschaftlich günstige Herstellung der Schnellschlussklappe möglich ist.

Die Schnellschlussklappe ist mit einem Gehäusekörper, mit einer in den Gehäusekörper eingelassenen Serviceöffnung, mit mindestens zwei in den Gehäusekörper eingearbeiteten Lagerstellen für eine angetriebene Welle und mit einem an der Welle befestigten, um deren Achse schwenkbaren und mit einem demontierbaren Sitzring zusammenwirkenden Klappenteller versehen. Als besonders vorteilhaft wirkt es sich bei dieser Schnellschlussklappe aus, dass die Lagerstellen ausserhalb des in dem Gehäusekörper inhomogene Spannungsverteilungen verursachenden Bereichs der Serviceöffnung angeordnet sind.

Ferner wirkt es sich vorteilhaft aus, wenn der Gehäusekörper der Schnellschlussklappe kugelförmig ausgebildet ist und deshalb giesstechnisch vergleichsweise einfach herzustellen ist. Die Kugelform ist zudem günstig, wenn eine homogenere Spannungsverteilung erreicht werden soll.

Ferner erweist es sich im Hinblick auf eine verbesserte Temperaturbeständigkeit als vorteilhaft, wenn der Gehäusekörper der Schnellschlussklappe aus einem warmfesten martensitischen Stahl mit einem Chromanteil von etwa 10% gegossen ist, und wenn der Sitzring aus einem ähnlichen, schmiedefähig ausgebildeten martensitischen Stahl gefertigt ist. Der Sitzring wird mittels mindestens zwei in Aussparungen des sitzrings eingreifende Bolzen positioniert. Die mindestens zwei Bolzen sind in dem Bereich, in dem sie in die Aussparungen ragen, exzentrisch ausgebildet, sodass bei einem Verdrehen der Bolzen, abhängig von der jeweiligen Drehrichtung, der Sitzring in eine seiner axialen Richtungen gedrückt wird. Besonders die Montage und die Demontage des Sitzrings werden durch diese Anordnung erleichtert. Ferner wirkt es sich vorteilhaft aus, dass der Sitzring mit einem kegelig ausgebildeten Sitz im Gehäusekörper sitzt, und dass dieser kegelig ausgebildete Sitz nicht selbsthemmend ist. Die Sitzfläche des kegelig ausgebildeten Sitzes ist um einen Winkel α gegenüber der Mittelachse des Sitzrings geneigt ist, wobei der Winkel α im Bereich zwischen 20° und 35°liegt, vorzugsweise wird er jedoch mit 27° ausgeführt.

Als besonders vorteilhaft im Hinblick auf eine gute sicherheitstechnische Auslegung der Schnellschlussklappe erweist es sich, wenn die Welle im Bereich zwischen den zwei Lagerstellen mit einer Achsversatz und Winkelunterschiede ausgleichenden Kupplung, beispielsweise mit einer Oldhamscheibe, versehen ist.

Weitere Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
Fig.1 eine Ausführungsform einer erfindungsgemässen Schnellschlussklappe,
Fig.2 einen Schnitt A-A durch den Gehäusekörper der Schnellschlussklappe gemäss Fig.1,
Fig.3 einen Teilschnitt durch die Schnellschlussklappe gemäss Fig.1, und
Fig.4 eine schematische Explosionszeichnung einer mit einer Oldhamscheibe versehenen Welle.

Bei allen Figuren sind gleich wirkende Elemente mit gleichen Bezugszeichen versehen. Alle für das unmittelbare Verständnis der Erfindung nicht erforderlichen Elemente sind nicht dargestellt. Ferner sind manche Sichtkanten der besseren Übersichtlichkeit halber weggelassen.

### WEGE ZUR AUSFÜHRUNG DER ERFINDUNG

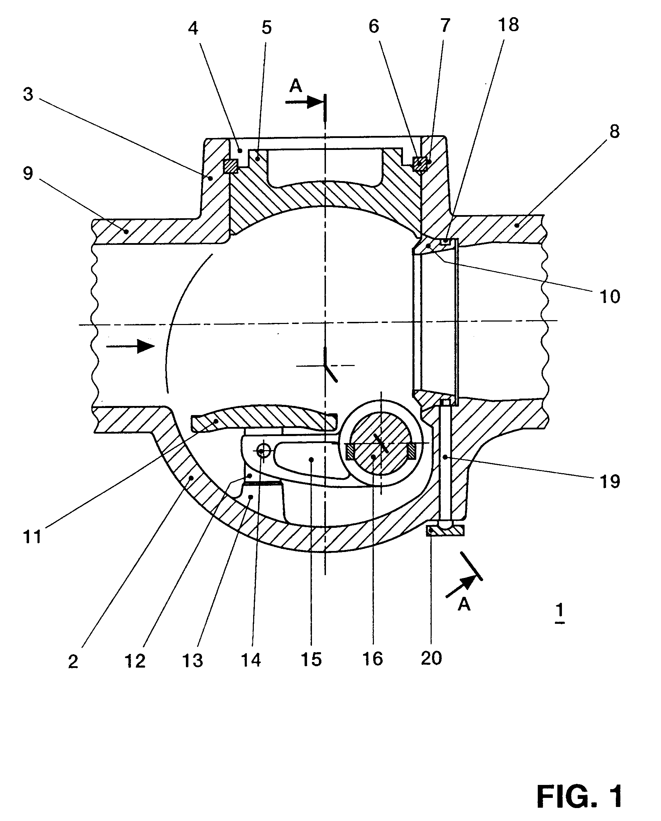

Die Fig.1 zeigt eine schematisch dargestellte schnellschlussklappe 1. Diese Schnellschlussklappe 1 weist einen kugelig ausgebildeten Gehäusekörper 2 auf, der mit einem Stutzen 3 für eine Serviceöffnung 4 versehen ist. Die Serviceöffnung 4 ist mittels eines der Kugelform des Gehäusekörpers 2 angepassten Verschlussdeckels 5 verschlossen. Der Verschlussdeckel 5 wird mittels eines bekannten Brettschneider-Verschlusses gehalten. Der Brettschneider-Verschluss weist unter anderem einen mehrteiligen Ring 6 auf der in einer ihm angepassten Aussparung 7 des Gehäusekörpers 2 gehalten wird. Die Führung des Verschlussdeckels 5 im Gehäusekörper 2 und die in diesem Bereich nötigen Abdichtungen sind nicht dargestellt. An den Gehäusekörper 2 sind zwei Anschlussstutzen 8,9 angegossen. Durch den Anschlussstutzen 9 strömt der Heissdampf in die Schnellschlussklappe 1 hinein und, bei, wie hier dargestellt, offener Schnellschlussklappe 1, strömt der Heissdampf durch den Anschlussstutzen 8 ab.

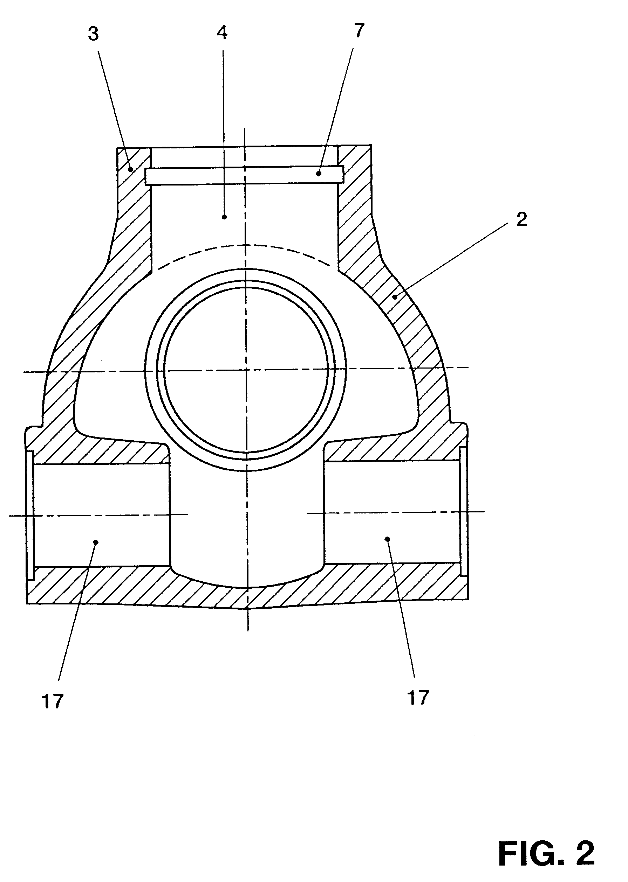

In den Gehäusekörper 2 ist im Bereich vor dem Anschlussstutzen 8 ein demontierbarer Sitzring 10 eingesetzt. Dieser Sitzring 10 dient als Dichtungssitz für einen Klappenteller 11. Der Sitzring 10 und der Klappenteller 11 sind jeweils an ihren Berührungsflächen mittels Hartmetallauflagen gepanzert. Der Klappenteller 11 ist hier nur teilweise geschnitten dargestellt. Der Klappenteller 11 weist einen als Anschlag wirkenden Schaft 12 auf, der in der gezeigten offenen Stellung der Schnellschlussklappe 1 auf einem an den Gehäusekörper 2 angegossenen Anschlag 13 aufliegt, wodurch der Hub des Klappentellers 11 begrenzt wird. Der Klappenteller 11 ist mittels eines Bolzens 14 in geringem Umfang beweglich in einem Hebel 15 gelagert. Der Hebel 15 ist starr mit einer angetriebenen Welle 16 verbunden. Die Welle 16 ist in zwei in den Gehäusekörper 2 eingearbeiteten Lagerstellen 17 gelagert. Aus Fig.2 ist die Ausbildung der Lagerstellen 17 zu entnehmen. Die Lagerstellen 17 sind so ausgebildet, dass die Kugelform des Gehäusekörpers 2 möglichst wenig gestört wird.

Der Gehäusekörper 2 ist ebenso wie der Hebel 15 aus einem warmfesten martensitschen Stahl mit einem Chromanteil von 10% gegossen, dieser Stahl wird als G-X12CrMoWVNbN 10 1 1 bezeichnet. Dieser Stahl setzt sich aus den folgenden wichtigen Komponenten zusammen:

| | | |
|---|---|---|
| C | 0,10 bis 0,14 | Gewichtsprozent; |
| Si | 0,20 bis 0,50 | Gewichtsprozent; |
| Mn | 0,40 bis 0,80 | Gewichtsprozent; |
| P | max. 0,020 | Gewichtsprozent; |
| S | max. 0,010 | Gewichtsprozent; |
| Cr | 10,0 bis 11,0 | Gewichtsprozent; |
| Ni | 0,80 bis 1,00 | Gewichtsprozent; |
| Mo | 0,95 bis 1,05 | Gewichtsprozent; |
| W | 0,95 bis 1,05 | Gewichtsprozent; |
| V | 0,20 bis 0,25 | Gewichtsprozent; |
| Nb | 0,06 bis 0,10 | Gewichtsprozent; |
| N | 0,045 bis 0,053 | Gewichtsprozent; |
| Ti | max. 0,005 | Gewichtsprozent; |
| Cu | max. 0,10 | Gewichtsprozent; |
| Al | max. 0,02 | Gewichtsprozent; |
| B | max. 5 ppm. | |

Der Sitzring 10, der Klappenteller 11 und die Welle 16 sind aus einem schmiedefähigen warmfesten martensitischen Stahl hergestellt, der als X12CrMoNiVNbN 10 1 1 bezeichnet wird. Dieser Stahl setzt sich aus den folgenden wichtigen Komponenten zusammen:

| | | |
|---|---|---|
| C | 0,11 bis 0,13 | Gewichtsprozent; |
| Si | 0,08 bis 0,15 | Gewichtsprozent; |
| Mn | 0,40 bis 0,50 | Gewichtsprozent; |
| P | max. 0,010 | Gewichtsprozent; |
| S | max. 0,005 | Gewichtsprozent; |
| Cr | 10,2 bis 10,8 | Gewichtsprozent; |
| Ni | 0,70 bis 0,80 | Gewichtsprozent; |
| Mo | 1,02 bis 1,10 | Gewichtsprozent; |
| W | 0,80 bis 0,95 | Gewichtsprozent; |
| V | 0,17 bis 0,22 | Gewichtsprozent; |
| Nb | 0,04 bis 0,06 | Gewichtsprozent; |
| N | 0,045 bis 0,060 | Gewichtsprozent; |
| Ti | max. 0,001 | Gewichtsprozent; |
| Cu | max. 0,05 | Gewichtsprozent; |
| Al | max. 0,010 | Gewichtsprozent; |
| As | max. 0,012 | Gewichtsprozent; |
| Sb | max. 0,0012 | Gewichtsprozent; |
| Sn | max. 0,007 | Gewichtsprozent; |
| B | max. 5 ppm. | |

Der Einsatz dieser beiden, einander insbesondere im Hinblick auf die Temperaturbeständigkeit, ähnlichen Stahlsorten, erlaubt ein, gegenüber herkömmlichen Schnellschlussklappen, weiteres Anheben der Temperatur des durch die Schnellschlussklappe 1 strömenden Heissdampfes und eine damit verbundene vorteilhafte Anhebung des Wirkungsgrades der gesamten Turbinenanordnung.

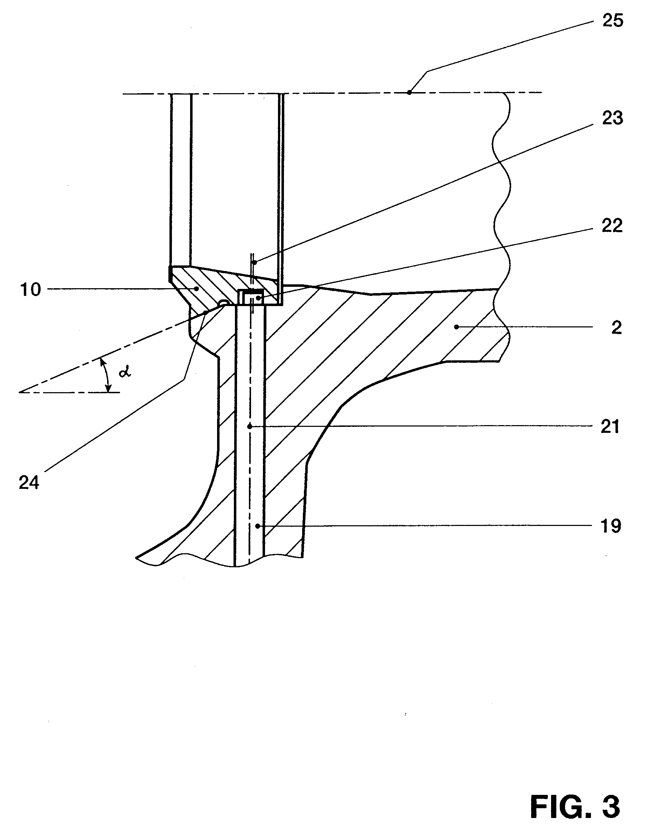

Der Sitzring 10 wird mittels in Aussparungen 18 des Sitzrings 10 eingreifende Bolzen 19 positioniert. Die Aussparungen 18 können einzeln in den Gehäusekörper 2 eingelassen sein, sie können aber auch, wie hier gezeigt, als um den Sitzring 10 umlaufende Rille ausgebildet sein. In der Regel dürften drei über den Umfang verteilte derartige Bolzen 19 vorgesehen sein, zwei einander gegenüberliegende Bolzen 19 dürften jedoch bereits genügen. Die Bolzen 19 werden mit jeweils einem, mit dem Gehäusekörper 2 verschraubten, den Kopf des Bolzens 19 formschlüssig aufnehmenden Flansch 20 gehalten. In Fig.3 ist ein Teilschnitt durch den Gehäusekörper 2 dargestellt, welcher unter anderem den zylindrisch ausgebildeten Schaft des Bolzens 19 mit seiner Achse 21 zeigt. Der Bolzen 19 ist an seiner Spitze mit einem zylindrisch ausgebildeten Fortsatz 22 versehen, dessen Achse 23 versetzt zur Achse 21 des Bolzens 19 angeordnet ist. Der Fortsatz 22 greift in die Aussparung 18 im Sitzring 10 ein, und zwar so, dass der Sitzring 10 bei der Montage mittels einer Drehung des Bolzens 19 in axialer Richtung auf seinen Sitz gedrückt wird, und dass der Sitzring 10 bei der Demontage mittels einer Drehung mit entgegengesetztem Drehsinn von seinem Sitz gelöst wird.

Der Sitzring 10 weist eine als Teil einer Kegelmantelfläche ausgebildete Sitzfläche 24 auf, die auf einer entsprechend ausgebildeten, in den Gehäusekörper 2 eingearbeiteten Fläche aufliegt. Der Sitzring 10 weist eine Mittelachse 25 auf. Die Sitzfläche 24 ist um einen Winkel α gegenüber der Mittelachse 25 geneigt, wie aus Fig.3 ersichtlich ist. Der Winkel α liegt im Bereich zwischen 20° und 35°, vorzugsweise wird er mit 27° ausgeführt. Dieser kegelig ausgebildete Sitz wird stets so ausgelegt, dass er nicht selbsthemmend ist, wodurch Montage und Demontage des Sitzrings 10 erleichtert werden.

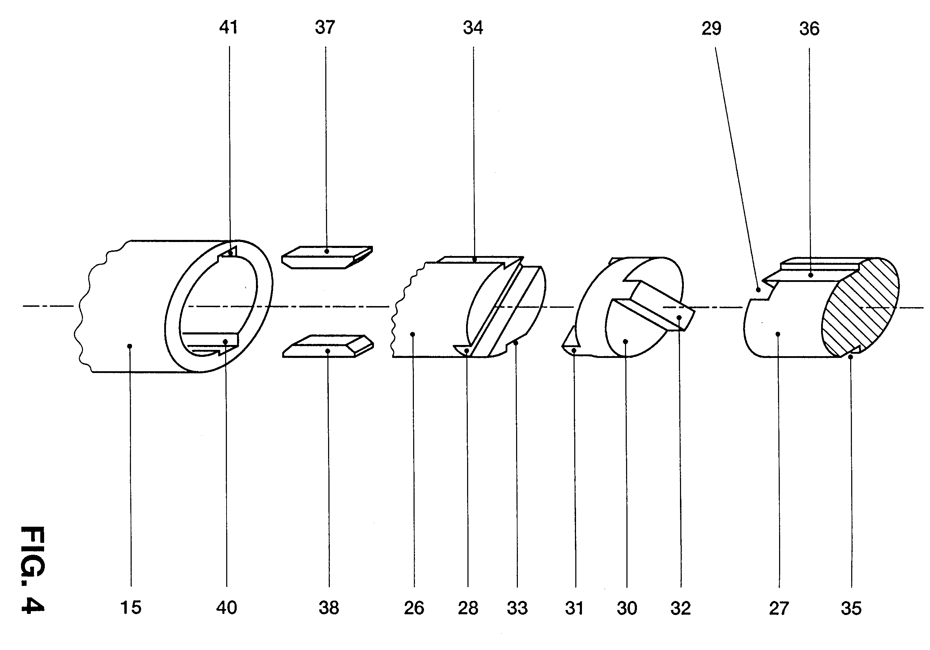

Als zusätzliche Sicherheitsmassnahme gegen das Langzeitklemmen wird die Welle 16 in dem Bereich zwischen den mindestens zwei Lagerstellen mit einer Achsversatz und Winkelunterschiede ausgleichenden Kupplung versehen. Wie in Fig.4 dargestellt, wird beispielsweise als Kupplung eine Oldhamscheibe vorgesehen. Die beiden Wellenenden 26,27 weisen an den jeweiligen Stirnseiten Nuten 28,29 auf. Ein scheibenförmig ausgebildetes, zwischen den Wellenenden 26,27 angeordnetes Zwischenstück 30 weist an seinen Stirnseiten angeformte Keile 31,32 auf, die formschlüssig in die Nuten 28,29 der Wellenenden 26,27 passen. Die Keile 31,32 sind um 90° zueinander versetzt angeordnet. Die Wellenenden 26,27 sind mit Aussparungen 33,34,35,36 versehen, in welche Keile 37,38 eingelegt werden. Diese Keile 37,38 werden mittels des übergeschobenen, passend ausgebildeten Hebels 15 in Position gehalten. Der Hebel 15 ist mit Nuten 40,41 für die Aufnahme der Keile 37,38 versehen. Die Funktionsweise dieser Kupplung wird als bekannt vorausgesetzt.

Zur weiteren Erläuterung der Wirkungsweise wird die Zeichnung nun etwas näher betrachtet. Bei dieser Schnellschlussklappe 1 ist die Lagerung des Klappentellers 11 in einem Bereich vorgesehen, der nicht infolge durch die Serviceöffnung 4 hervorgerufener Inhomogenitäten im Gehäusekörper 2 zusätzlich spannungsmässig belastet ist. Deformationen des Gehäusekörpers 2 in diesem Bereich, die zu einem Langzeitklemmen der Welle 16 führen können, werden dadurch vermieden. Bei weiter steigenden Forderungen an die Fluchttreue der Achsen der beiden Lagerstellen 17, kann die Welle 16 zusätzlich in dem Bereich zwischen den beiden Lagerstellen 17 mit einer Achsversatz und Winkelunterschiede ausgleichenden Kupplung versehen werden, wodurch auftretende Deformationen der Lagerstellen 17 ausgeglichen werden.

### BEZEICHNUNGSLISTE

- 1: Schnellschlussklappe
- 2: Gehäusekörper
- 3: Stutzen
- 4: Serviceöffnung
- 5: Verschlussdeckel
- 6: Ring
- 7: Aussparung
- 8,9: Anschlussstutzen
- 10: Sitzring
- 11: Klappenteller
- 12: Schaft
- 13: Anschlag
- 14: Bolzen
- 15: Hebel
- 16: Welle
- 17: Lagerstelle
- 18: Aussparungen
- 19: Bolzen
- 20: Flansch
- 21: Achse
- 22: Fortsatz
- 23: Achse
- 24: Sitzfläche
- 25: Mittelachse
- 26,27: Wellenenden
- 28,29: Nuten
- 30: Zwischenstück
- 31.32: Keile
- 33,34,35,36: Aussparungen
- 37,38: Keile
- 40,41: Nuten

## Patentansprüche

1. Schnellschlussklappe (1) mit einem Gehäusekörper (2), mit einer in den Gehäusekörper (2) eingelassenen Serviceöffnung (4), mit mindestens zwei in den Gehäusekörper (2) eingearbeiteten, ausserhalb des in dem Gehäusekörper (2) inhomogene Spannungsverteilungen verursachenden Bereichs der Serviceöffnung (4) angeordneten, Lagerstellen (17) für eine angetriebene Welle (16), mit einer an der Welle (16) befestigten, um deren Achse schwenkbaren und mit einem demontierbaren Sitzring (10) zusammenwirkenden Klappenteller (11), dadurch gekennzeichnet,
- dass die Welle in dem Bereich zwischen den mindestens zwei Lagerstellen (17) mit einer Achsversatz und Winkelunterschiede ausgleichenden Kupplung versehen ist.

2. Schnellschlussklappe nach Anspruch 1, dadurch gekennzeichnet,
- dass der Gehäusekörper (2) kugelförmig ausgebildet ist.

3. Schnellschlussklappe nach Anspruch 1 oder 2, dadurch gekennzeichnet,
- dass der Gehäusekörper (2) aus warmfestem martensitischem Stahl mit einem Chromanteil von 10% gegossen ist, und
- dass der Sitzring (10) aus aus einem schmiedbaren warmfesten martensitischen Stahl mit einem Chromanteil von 10% geschmiedet ist.

4. Schnellschlussklappe nach Anspruch 1, dadurch gekennzeichnet,
- dass der Sitzring (10) mittels mindestens zwei in Aussparungen (18) des Sitzrings (10) eingreifenden Bolzen (19) positioniert wird, und
- dass die mindestens zwei Bolzen (19) in dem Bereich, in dem sie in die Aussparungen (18) ragen, exzentrisch ausgebildet sind, sodass bei einem Verdrehen der Bolzen (19), abhängig von der jeweiligen Drehrichtung, der Sitzring (10) in eine seiner axialen Richtungen gedrückt wird.

5. Schnellschlussklappe nach Anspruch 1, dadurch gekennzeichnet,
- dass der Sitzring (10) mit einem kegelig ausgebildeten Sitz im Gehäusekörper sitzt, und
- dass dieser kegelig ausgebildete Sitz nicht selbsthemmend ist.

6. Schnellschlussklappe nach Anspruch 5, dadurch gekennzeichnet,
- dass die Sitzfläche (24) des kegelig ausgebildeten Sitzes um einen Winkel α gegenüber der Mittelachse (25) des Sitzrings (10) geneigt ist, wobei der Winkel α im Bereich zwischen 20° und 35°liegt, vorzugsweise wird er jedoch mit 27° ausgeführt.

7. Schnellschlussklappe nach Anspruch 1, dadurch gekennzeichnet,
- dass als Kupplung eine Oldhamscheibe vorgesehen ist.
